(19) Europäisches Patentamt / European Patent Office / Office européen des brevets

(11) **EP 1 984 104 B1**

(12) **EUROPEAN PATENT SPECIFICATION**

(45) Date of publication and mention
of the grant of the patent:
**11.07.2012 Bulletin 2012/28**

(21) Application number: **07704811.4**

(22) Date of filing: **14.02.2007**

(51) Int Cl.:
*B01F 3/04* (2006.01)    *B01F 7/00* (2006.01)
*B01F 7/16* (2006.01)    *B01F 7/22* (2006.01)
*B01J 8/22* (2006.01)    *B01J 19/18* (2006.01)
*B01J 19/00* (2006.01)

(86) International application number:
**PCT/FI2007/000037**

(87) International publication number:
**WO 2007/093668 (23.08.2007 Gazette 2007/34)**

(54) **METHOD AND MIXER APPARATUS FOR MIXING GAS INTO SLURRY IN A CLOSED REACTOR**

VERFAHREN UND MISCHER ZUM MISCHEN VON GAS IN SCHLAMM IN EINEM GESCHLOSSENEN REAKTOR

PROCEDE ET APPAREIL DE MELANGE POUR LE MELANGE D'UN GAZ EN UNE PATE DANS UN REACTEUR FERME

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.02.2006 FI 20060151**

(43) Date of publication of application:
**29.10.2008 Bulletin 2008/44**

(73) Proprietor: **Outotec Oyj**
**02200 Espoo (FI)**

(72) Inventors:
• **HULTHOLM, Stig-Erik**
**FI-28360 Pori (FI)**
• **LILJA, Launo**
**FI-28100 Pori (FI)**

• **NYMAN, Bror**
**FI-28450 Vanha-ulvila (FI)**

(74) Representative: **Graf Glück Habersack**
**Kritzenberger**
**Patentanwälte**
**Wotanstraße 64**
**80639 München (DE)**

(56) References cited:
**EP-A- 0 284 929        WO-A1-2004/082841**
**WO-A1-2004/082842        WO-A1-2005/014155**
**FR-A- 2 763 867        US-A- 4 587 314**
**US-A- 5 078 505        US-A- 5 078 505**
**US-A- 5 431 860        US-A1- 2004 062 144**
**US-A1- 2004 062 144**

**Description**

The invention presented here relates to a mixer apparatus and a method for mixing gas into slurry in a closed mixing reactor, which uses gas as a process chemical with high efficiency and in which the solids content in the solution is high. The mixer apparatus accordant with the invention comprises a closed reactor, at least two mixers at different heights, which are on the same shaft, a gas feed pipe below the lower mixer and baffles located in the wall area. The mixer blades are mostly rectangular in shape and are a minimum of six in number. In the method accordant with the invention, the gas fed into the bottom section of the reactor is dispersed into a slurry formed of a liquid and solids by means of the lower mixer, so that the flow of slurry is discharged onto the wall of the reactor space, a part of which flow is made to turn back under the mixer and part is made to rise into the space between the baffles and the reactor wall in the upper section of the reactor space. The flow of slurry in the upper section of the reactor is deflected with the aid of the upper mixer to direct it at the centre of the reaction space, simultaneously causing horizontal and vertical flows that carry gas bubbles to form. The slurry flow is also deflected by means of the upper mixer to discharge downwards as a uniform flow towards the lower mixer.

Conventionally, a closed vertical reactor consists of a vertical cylindrical section and an enclosed bottom and cover section. The cover section has an aperture in it, which is generally slightly larger than the diameter of the mixer. The large gas vortex that is caused by mixing in the reactor is prevented mainly by four standard baffles. In a standard case the width of the baffles is 0.05 - 0.10 times the diameter of the reactor, and the gap between the baffles and the wall is 0.017 times the diameter of the reactor. An ordinary four-blade mixer is attached to the lower end of the shaft, where the blade angle can be adjusted separately. Generally it is 45°. In cases where surface suction is desired, the mixer can be raised closer to the surface of the solution. In that case, the conical gas formations made by the mixer, vortexes, are dispersed into bubbles by the mixer and pushed downwards some way, not however right to the bottom, because the flow achieved by the mixer in the direction of the shaft is not powerful enough even for suspension of the solids at the bottom to take place properly.

Should the effective volume of the reactor be such that the depth of the liquid to be mixed is about the same as the diameter of the reactor, in normal cases one mixing member at the bottom end of the shaft is sufficient. The direction and strength of the force effect of the mixing member depends on its type (shape). Processes normally require mixing, which forms both strong turbulence and sufficient circulation. If the effective volume is so great that the solution depth is 1½ - 2 times or more than the diameter of the reactor, often several mixing members are required above one another at a suitable distance from each other. In this case the types (shapes) of mixer on the same shaft can differ from each other.

Gas feed usually occurs by feeding oxygen (oxidation) or hydrogen (reduction) into the impact zone of the dispersing mixing member with sufficient force. Often in closed reactors one wishes to get the gas from above the surface and the slurry circulation back into the solution flow. If air is used, this does not seem sensible, because then the quantity of nitrogen only increases in the circulation, but with both pure oxygen and hydrogen the final gas can be recovered for further use by sucking it from above the surface.

To suck the gas from above the surface and disperse it further into the slurry, self-suction cross-pipes are known in the prior art, in which the gas space at the lower end of the hollow shaft branches out normally into a four-tipped open pipe. The rotating cross-pipe causes underpressure in the gas space, due to which the gas is discharged and dispersed into bubbles in the reactor solution space. It should be noted that as the temperature of the solution rises, the vapour pressure rises simultaneously, whereby the effect of the underpressure is weakened. This kind of cross-pipe structure is not able, however, to disperse the gas further into the solution, much less keep the thick solids suspension in motion.

A method is also known of sucking gas from the surface on what is termed the down-draft principle. US patent publication 4,454,077 describes an apparatus, in which a double-headed screw-type mixing member is used for down-pumping gas via a central tube, and additionally the apparatus includes upper and lower baffles. US patent publication 4,328,175 describes the same type of device, but the top end of the central tube is conically-shaped.

Thus it is known that gas travels to the mixer by means of intensifying the powerful central vortex created by the mixer shaft. This strong and often voluminous gas vortex transports gas from the surface into the liquid or slurry to be mixed sometimes very effectively, but at a certain gas volume the functioning of the mixer member is weakened as the mixer rotates "in a big gas bubble". Then as the power grows weaker the vortex weakens and the input of the gas from the surface into the solution is reduced. The vortex generated in the way described above is however uncontrolled and as it reaches the mixing member it causes violent power fluctuations and therefore damage to the equipment etc. Worst of all, the mixer can no longer accomplish the mixing of pulverous solids due to its ineffectiveness, particularly with a high suspension density of pulverous solids.

A method is presented in the article: "Onset of gas induction, power consumption, gas holdup and mass transfer in a new gas-induced reactor", Hsu, Y-C., Peng, R.Y. and Huang, C.-J., Chem. Eng. Sci., 52, 3883 (1997), where gas is sucked from the surface by means of a vortex generated at the base of a large shaft. In the method two mixers connected to the same shaft and located in a cylindrical draft tube were used, which caused the vortex effect in question by means of the underpressure they created. There were no baffles in the reactor to prevent a vortex. The upper mixer thus causes a deep vortex at the base of the shaft, and the gas is sucked into the liquid from the lower part of the vortex. Probably the suction of gas into the mixer occurs in spurts and puts a strain on the mixer member. The lower mixer receives both sucked-in gas and the gas fed into it and disperses it into the liquid. The gas-liquid current from the lower part of the suction pipe is discharged towards the lower section of the reactor, deflecting it along the sides up towards the surface. The gas is discharged above the surface. The drawback of the method is the fact that the gas no longer circulates in the liquid downwards from the upper part i.e. there is no real circulation gas, instead it is discharged directly above the surface, where the gas is released from the liquid due to the centrifugal effect. The discharge of gas even intensifies the large and powerful vortex from the upper section and the gas enters via the vortex in fits and starts and therefore causes mixer damage (cavitation etc.)

A method is known from US patent 5,549,854 for sucking gas from above a liquid surface by means of adjustable special baffles using a rotating mixer member as energy source. Controlled suction vortexes can be achieved with this method, which do not necessarily convey the gas as far as the mixer member itself. There is no question in the patent of capturing upward-moving gas bubbles in the return stream, so that they are prevented from rising above the slurry surface.

A method is also known, described in EP patent no. 1,309,394, of sucking gas from above the surface of a solution in a closed reactor with two special mixers on the same shaft. In that method, the gas is both dispersed and spread downwards with the upper mixer and simultaneously towards the edge of the reactor. There is no attempt to prevent the gas rising upward from the reactor edge from leaving the slurry space let alone to suck it back into the lower mixer.

EP1,309,394 further discloses a mixer apparatus according to the preamble of claim 1.

Getting a sufficient amount of gas into a suspension of solids and solution in closed oxidation and reduction reactors, particularly when the solids content is high i.e. around 30%, normally requires that the gas is routed into the solution space in the lower part of the reactor, mainly under the mixing member. Often this gas is fed down through the surface of the solution by means of a pipe, which is from its lower part directed towards the central reactor shaft and turned under the mixer. This ensures that the gas is conveyed to the lower section of the reactor and is dispersed with the mixer.

If the process requires a lot of power ($kW/m^3$), there is reason to use a mixer requiring/providing a lot of power. It is known how to increase the power provided by a mixer by increasing the speed of revolution, but it should be noted that at the same time the tip speed of the mixer increases and when it increases significantly (> 6 m/s), the mixer starts to wear heavily.

The invention presented here relates to a mixer apparatus, according to claim 1, and a method, according to claim 16, for mixing gas in a closed mixing reactor, which uses gas as a process chemical with a high efficiency and in which the concentration of pulverous solids in solution is high i.e. may be in the region of over 40%. The purpose of the invention is to present a mixer apparatus and a method whereby the disadvantages of the devices presented above may be avoided. With the method and apparatus according to the invention, one can mix a gas effectively into a slurry formed of a liquid and solids and circulate gas bubbles containing unreacted gas with the slurry so that the majority of the gas bubbles travel with the slurry flow and enable the reactions between the gas and the slurry. Only a small number of the gas bubbles are discharged above the surface of the slurry and even that amount can be brought back into the slurry circulation in the desired quantity by means of vertical vortexes formed in the upper part of the slurry.

The mixer apparatus accordant with the invention is intended for mixing gas into a slurry formed of a liquid and solids. The mixer apparatus comprises a closed reactor, with an effective slurry depth that is 1½ - 2 times the diameter of the reactor, two mixers located at different depths, which are on the same shaft, baffles directed inwards from the wall zone of the reactor and a gas feed pipe. The reactor is typically a cylindrical vertical reactor, which is provided with a base and a cover. The upper mixer is equipped with at least six, preferably eight, blades directed to the side and inclined from the horizontal. The angle of inclination is small, around 25 - 35 degrees. The lower mixer is similar to the upper mixer in structure. The angle of inclination of the mixer blades of the lower mixer is around 50 - 70 degrees, according to claim 1 60-70 degrees, and the height of the mixer is preferably 1.5 times that of the upper mixer. The number of baffles is at least 6 and preferably 8. The range of the baffles is around 1/5 of the reactor diameter. The gas feed pipe is located in the bottom section of the reactor below the lower mixer.

The invention also relates to a method using the mixer apparatus as claimed in one of claims 1-15 for dispersing gas fed into the bottom section of a closed reactor into a slurry formed of liquid and solids by means of a controlled and desirable flow field, which in turn is formed in the reaction space by means of baffles and a mixer member located in the reaction space. The effective slurry depth of the reaction space is 1½ - 2 times the diameter of the reaction space and the mixer member consists of two mixers located on the same shaft. The gas is fed below the lower mixer into the slurry flow, which is directed with said mixer into the lower section of the reaction space wall and is made to discharge there in two separate streams. One stream is made to deflect via the wall towards the centre of the reaction space bottom and the second is made to rise in the zone formed by the reaction space wall and the baffles upwards towards the surface. In the vicinity of the surface, the flow is deflected by means of the upper mixer towards the centre of the reaction space so that horizontal and vertical vortexes carrying gas bubbles are formed simultaneously in the flow. The surface stream is so swift that the surface is broken and air is also mixed directly into the stream in question. The direction of the slurry stream in the middle of the reaction space is deflected by means of the upper mixer to flow downwards as a uniform tube-like flow towards the lower mixer.

This arrangement enables the elimination of the drawbacks of the known methods and the achievement of effective horizontal vortexes in the vicinity of the liquid surface, which are directed from the edge of the reaction space towards the centre and small vertical vortexes that suck gas into the liquid. The horizontal and vertical vortexes formed in the upper part of the reactor are achieved primarily with the aid of the upper mixer. In addition to the gas vortexes in question, the smallish gas bubbles distributed evenly into the slurry formed of liquid and solids are pressed down with the extensive flow of slurry surrounding the shaft to the lower mixer.

The lower mixer takes considerably more energy than the upper mixer. This energy is used to disperse the gas bubbles sucked down from the upper part of the slurry suspension into ever smaller bubbles. In this way the contact surface between gas and liquid is increased, so that the reactions occur much more quickly and completely than in conventional methods. The residual energy of the lower mixer is used for mixing solids particles in high slurry densities and spreading them throughout the reaction space, and for mixing the gas fed from below the lower mixer into the slurry. It is characteristic of the mixer of the mixing apparatus and the method that the power taken by the lower mixer is at least three times, preferably over five times, that of the power requirement of the upper mixer.

The essential features of the invention will be made apparent in the attached claims.

According to one preferred embodiment of the invention, unreacted gas in the reactor space rising up from below along the edge of the reaction space is prevented from getting above the surface of the liquid by means of the upper mixer. Instead, the direction of the slurry-gas flow is deflected in the upper part of the reaction space to be directed from the edges towards the centre and downwards in the central part. It is also part of the embodiment that the upper mixer is shaped so that it also sucks the small amount of gas, which has nevertheless released out of the slurry above the liquid surface, into the downward-directed flow.

The mixer apparatus accordant with the invention includes a reactor in vertical position, with an effective slurry depth of 1½ - 2 times that of the reactor diameter T. The solids content of the slurry is typically high, in the region of 500 g/l. The reactor typically has a curved bottom (known as a shallow pressure vessel bottom) and a gastight cover in order to achieve a closed space. The bottom can also be straight. Reactors can be used in both atmospheric and pressurised conditions.

The mixer apparatus accordant with the invention typically includes a mixer member, where there are two mixers located at different heights on the same shaft. The diameter of both mixers is the same and they are large i.e. the ratio of mixer diameter D to reactor diameter T is in between over 0.4, but a maximum of 0.5. The number of mixer blades is a minimum of 6, preferably 8. The blades are mostly rectangular in shape and inclined from the horizontal. The angle of inclination of the upper mixer blades is 25-35°, preferably 30°. The angle of inclination of the lower mixer blades is greater, in the region of -70°, preferably 62°, according to claim 1 60-70°. The height of the lower mixer is preferably 1.5 times that of the upper.

The rotation speed of the mixers is adjusted so that the tip speed does not rise above 5 m/s. If the tip speed rises higher, particularly hard and angular materials such as pyrite, quartz and chromite wear the blades to a detrimental extent. The distance of the lower mixer from the bottom is preferably about the diameter of the mixer.

When the effective slurry height is in the range described above i.e. 1½-2 times the reactor diameter, and the slurry density is high, the answer in conventional solutions is generally a third mixer, but in the solution accordant with the invention effective mixing is achieved with two mixers. The distance between the mixers is dependent on the height of the reactor. When the effective slurry height is in the range of 1½ times the reactor diameter, the distance between the mixers is around 50 - 60% of the effective slurry height. When the effective slurry height of the reactor is in the range of 2 times the reactor diameter, the distance between the mixers is around 60 - 70% of the effective slurry height.

According to the preferred embodiment of the invention the upper mixer is designed so that it achieves an extensive downwardly-oriented flow in the middle of the reactor, whereby the flow behaves just as if there was a pipe around it ("down-draft"). The diameter of the cross-section of this flow is about the same or larger than the diameter of the mixers. In the right speed range, due to their lightness the gas bubbles try to resist the down-draft, whereby they end up with an oscillating movement and in this way the bubbles increase the reactions between the gas and the slurry.

According to one preferred embodiment, an important task of the lower mixer in addition to dispersion is to achieve a flow field such that gas, liquid and solids particles are in circular motion in the lower section of the reactor, whereby the substances fed into the process have time to react with each other.

The flow field formed with the aid of the mixers accordant with the invention can be described as follows: the lower mixer receives the extensive flow coming from the upper mixer and spreads it obliquely downwards towards the wall of the lower section of the reactor. Here the flow divides into two. Part of the flow directed at the lower section of the reactor wall is deflected less than 90 degrees and turns via the wall towards the centre of the reactor bottom and on below the lower mixer, where new reagent gas is fed into the flow via the gas pipe to be dispersed. The purpose of good, controlled mixing is to get the solution, solids and gas to react with each other. In this way in a well-mixed suspension the desired components are leached from the solids and at the same time the desired parts of the gas such as the oxygen of the air dissolve into the liquid.

The second part of the flow directed at the reactor wall is deflected to flow upwards. This means that the upward-directed flow first makes a forceful and fast 90-degree turn, which sweeps the solids particles near the wall upwards towards the upper section of the reactor. The upward flow takes place typically in the space between the inner edge of the baffles and the wall, which is dimensioned to be 1/5 of the reactor diameter. Another strong change in direction takes place in the slurry flow near the surface of the slurry, this time in the direction of the reactor centre towards the upper mixer. This means that the extra assistance of the baffles allows the formation of horizontal vortexes carrying gas bubbles with them, which largely prevent the unreacted gas from leaving the slurry.

In most known reactors the gas in the slurry in large volumes is only partially dispersed thus reducing the power take-off of the mixer.

The mixing equipment arrangement accordant with the invention also includes wide baffles, of which there are at least six, but preferably eight. The range of the baffles from wall to centre is around one-fifth of the reactor diameter (T/5), in other words the distance of the inner edge of the baffle from the reactor wall is about 20% of the reactor diameter and the width of the baffle is 12-15% of the reactor diameter. The vertical gap remaining between baffle and wall is also larger than standard i.e. 6 - 8% of the reactor diameter.

Baffles may be utilised in other ways than forming desired flows. It is known that an increase in flow rate in the vicinity of heat transfer tubes improves heat transfer considerably. Heat transfer is particularly effective when the heat transfer tubes are located in the baffles i.e. the baffles act as heat transfer members. In this way the baffle is formed from a tube cassette used for heat transfer. Normally there is always a gap between the tubes in a tube cassette of at least the size of the tube, whereby a medium flows around each tube, with the intention of transferring or recovering its heat.

Tube cassettes with gaps between them cannot be used in the solution accordant with this invention, because gaps weaken the formation of the desired flow field. Instead, one solution accordant with the invention is to use what are termed fin tubes, where vertical tubes are connected to each other by means of plate-like components. In this way a structure is formed that is equivalent to a normal baffle in relation to slurry flow accordant with the invention. Thus the baffles used in the mixer apparatus and method accordant with the invention operate both to form the desired powerful flows and as a heat transfer medium.

The apparatus according to the invention is described further with reference to the appended drawings, where

Figure 1 presents a vertical section of a reaction space of the prior art with its flow field,
Figure 2 shows a vertical section of an embodiment of the invention with its flow field,
Figure 3A shows a vertical section of an upper mixer of a mixer member accordant with the invention and 3B the mixer as seen from above,
Figure 4A presents a vertical section of a lower mixer of a mixer member accordant with the invention and 4B the mixer as seen from above, and Figure 5 shows a cross-section of one baffle accordant with the invention.

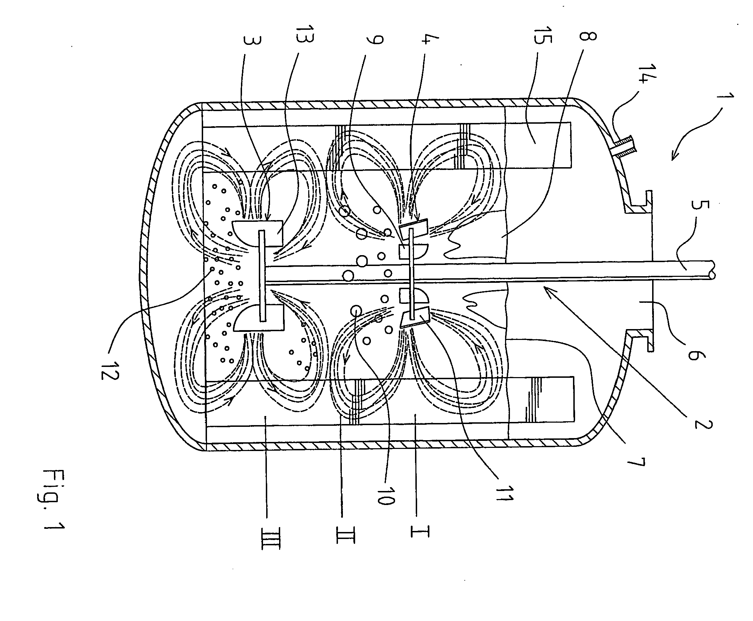

Figure 1 shows that reactor 1 is a closed reactor such as for instance an autoclave. A mixer 2 according to the prior art consists of a lower mixer 3 and an upper mixer 4, which are suspended from a shaft 5. This kind of mixer is described for instance in EP patent 1,309,394. The mixers are about the size of the cover aperture 6 i.e. a mixer/reactor diameter ratio D/T <0.4. The numerous small conical gas formations 8 of upper mixer 4 obtained on the surface of the solution 7 are dispersed by means of the vertical and shaped inner vanes 9 of the upper mixer into considerably smaller bubbles 10. The outer vanes 11 of the upper mixer 4 spread and push the bubbles formed there to the lower mixer 3, but due to the "smallness" of the upper mixer and the spreading caused by the mixer it requires much more energy to press the bubbles downwards than in the case of the invention now presented. As the flow diagram shows, three zones (I - III) are formed in the flow field of the reactor accordant with the prior art; an upper zone I of surface suction and dispersion, in the middle a mixer flow collision zone II, which is the reason why additional energy is required to press the bubbles down, and the lowest zone of dispersion and actual reaction III. This zone receives and further disperses the gas bubbles into extremely small bubbles 12 by means of the shaped vertical vanes 13 of the lower mixer 3. The same vanes that give a powerful flow spread these small bubbles into the surrounding solution and at the same time make a suspension of the solids particles. The gas needed in the reactions is fed into the upper section of the reactor, its gas space, via a gas connection 14. The baffles 15 used according to the publication are standard flow baffles.

As Figure 1 shows and the description of the patent in question makes clear, the apparatus and particularly the upper mixer have been developed to suck gas from above the liquid surface. In practice it has been found that a collision zone is formed between the first and third zones, resulting in the fact that the mixer solution is not especially effective, at least not when operating at a high slurry density.

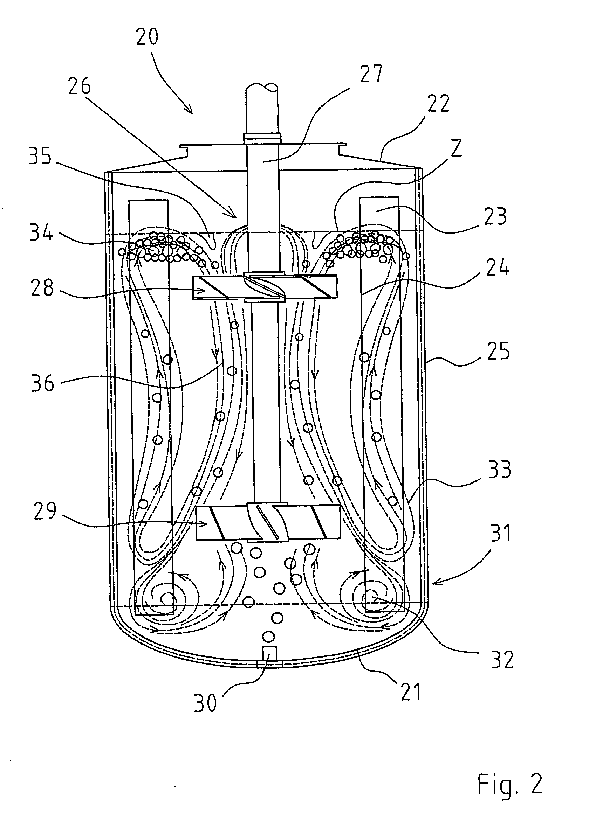

Figure 2 presents a diagram of a reaction space accordant with this invention and the flow fields formed in it. In the solution accordant with the invention attention is paid specifically to the properties required in leaching, such as the effective and uniform mixing of solids and a means of preventing unreacted gas from leaving the suspension. In the solution accordant with the invention attention is also paid to the way gas is sucked from the rising edge zone layer back into the downwards-oriented circulation occurring around the central shaft. According to the solution, the gas that has risen above the liquid surface is also sucked along into the circulation.

In Figure 2 the reactor 20 in vertical position is filled in accordance with our invention with a solids-solution mixture i.e. a slurry to height Z (effective slurry height), which is preferably 1½ - 2 times the reactor diameter T. The solids content of the slurry is typically high, around 500 g/l. The reactor has a curved bottom 21 (known as a shallow pressure vessel bottom) and a gastight cover 22 to achieve a closed space. The reactor includes essentially wide flow baffles 23, of which there are at least six, but preferably eight. The range of the baffles from wall to centre is about one-fifth of the reactor diameter (T/5), i.e. the distance of the inner edge 24 of the baffle from the reactor wall 25 is around 20% of the reactor diameter. Naturally a vertical gap remains between the baffle and the wall, which is also greater than standard i.e. about 6 - 8% of the reactor diameter.

The energy required for the reactions between liquid, solids and gas is achieved principally with the aid of the mixer member 26 accordant with the invention. The mixer member consists of two mixers fixed one above the other on the same shaft 27, namely an upper mixer 28 and a lower mixer 29. The mixers in this case are in a way the same type i.e. what are termed pitch-blade models. The process gas, such as oxygen, nitrogen or some other "pure" gas, is fed into the lower section of the reactor below the lower mixer 29 via a gas pipe 30.

The lower mixer 29 does the real work i.e. it takes about 75 - 85% of the power released into the slurry. The mixer forms a flow field in the lower section of the reactor such that the slurry flow is discharged from the tips of the mixer blades obliquely downwards towards the lower part of the reactor wall 31 so that the "impact point" is in fact at the vertical wall and not the bottom. This means that the flow near the wall is divided into two. The stream that is deflected obliquely downwards 32 continues its turn towards the centre of the reactor bottom and on from the centre up into the coverage area of the lower mixer.

The stream deflected downwards from the impact point on the reactor wall forms a toroidal circulation in the area of the reactor wall 31 and curved bottom. The powerful circulation 32 that is generated improves the contact between solids, solution and gas. In this way the driving power is obtained for the desired reactions between the solution, solids and gas. In some cases some reaction product tries to accumulate on the surface of the solids particles and thus slows down the reactions, but it has been found that the accumulation of these kinds of reaction products is minimal thanks to the powerful lower mixer. One such reaction product is the elemental sulphur formed in sulphide leaching, which tries to accumulate on the still undissolved sulphide surfaces, passivating them.

The second part 33 of the flow formed by the lower mixer rises in an extremely steep curve guided by the baffles 23 in the vicinity of the wall 25 up towards the surface. The purpose of the lower mixer is thus to form a flow field in the lower section of the reactor. In addition, the lower mixer is shaped so that it disperses the gas fed under the mixer and the circulation gas coming from above into small bubbles in order to achieve the largest possible contact surface for the reactions. In addition, the mixer is shaped in such a way that it makes the solids particles in the reaction space move and keeps them in motion and further ensures that the solids content is even throughout the entire reaction space. The profiling of the lower mixer also enables a big difference in speed or turbulence between the particles and the other phases in order to promote the reactions. Advantageously, the large blade angle of the lower mixer generates vortexes, which facilitate the progress of the chemical reactions.

The power taken by the upper mixer is smaller i.e. about 15 - 25%. The upper mixer is shaped so that it forms a flow field in the upper section of the reactor such that the gas-bearing slurry flow rising towards the surface in the vicinity of the wall makes an extremely sharp turn before the surface towards the reactor centre. This means that the baffles help to form strong horizontal vortexes 34 in the horizontally flowing field, which push the gas in the rising flow with them at least as far as the area of the upper mixer 28. The second task of the upper mixer is to achieve such powerful suction pools 35 mostly above the mixer, that the gas above the surface is sucked in via them and mixed into this same horizontal flow and moved further on to the upper mixer. From here the upper mixer 28 presses the gas-slurry suspension in question as a flow with the widest possible cross-section 36 down towards the lower mixer 29.

The large diameter size of the mixers is precisely the reason why the principle described above works, so one could even speak of the formation of an invisible down-draft tube in the centre of the reactor. The formation of the swift flows described above has also been proved in practice. The large cross-sectional area of the downward-oriented flow forces the cross-sectional area of the slurry flow rising on the reactor wall to be small, and thus the upward-rising flow has a high speed. Typically the speed of the rising flow is in the region of 0.5 -1.5 m/s, preferably between 0.8 - 1.2 m/s. If the size of the reactor is in the region of 300 - 500 $m^3$, this means that the entire contents of the reactor pass via the lower mixer at 15 - 40 second intervals.

Mixing reactors are often used for example in the leaching of ore or concentrate. In that case the leaching stage usually includes several reactors and for instance in the apparatus included in the scope of this invention the slurry is transferred from one reactor to another as overflow, so that it is not shown in detail in the diagram.

An extensive cross-sectional area of the downward-directed flow and the oscillating gas bubbles in it are characteristic of the mixing method and apparatus now developed. The horizontal vortexes 34 in the surface of the slurry layer directed from the edges towards the centre take with them a considerable portion of the gas bubbles to the upper mixer 28, which presses the bubbles into a new circulation towards the lower mixer. A small amount of gas is able however to discharge into the gas space of the reactor, but it is sucked back into the slurry via the vertical vortexes 35 formed by the upper mixer and the surface broken by the swift surface flow back towards the suction zone of the upper mixer. It was found in tests that the efficiency of the gas use is in the region of 90 - 100%, often over 95%.

The residual driving power for the chemical reactions comes from the gas which dissolves from the bubbles flowing downwards about ten times more than from the bubbles flowing upwards. The downward-directed flow takes place precisely in the space between the mixers, so it is advantageous that the mixers are at the distance from each other accordant with our invention. Correspondingly it is characteristic of our method that the cross-sectional area of the downward-directed flow is much greater than the conventional. The downward-directed flow extends preferably from the mixer shaft 27 outwards right up to the inner edge of the baffles. The downward-directed flow represents about 30 - 40% of the entire reactor cross-section.

For its part the flow speed of the large rising flow has the effect that the flow deflections in both the lower and upper sections of the reactor are steep, whereby both the solids flow 33 upwards and the gas-sucking horizontal vortexes 34 are strengthened. The speed of the downward slurry flow 36 occurring in the centre can be regulated precisely by dimensioning the upper mixer such that the gas bubbles following with it begin to oscillate, whereby the reactions between gas and slurry are increased. The combined effect of the mixers brings about macroflows, of which one circulates via the bottom and another via the surface zone back to the lower mixer. In addition, a toroidal circular flow is generated against the bottom, which further increases the chemical performance values.

The mixer combination accordant with the invention works ideally, because due to their large size both mixers deliver considerably more mixing energy than normal for both gas dispersion and making a suspension of solids. At the same time the mixers lose their power very slowly as the amount of gas sucked in increases, which is due precisely to effective dispersion and the mixing method of spreading out the bubbles.

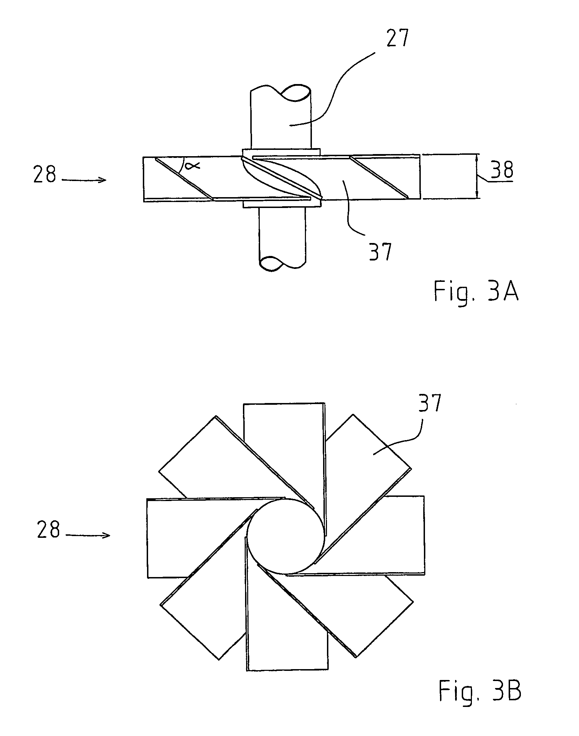

Figure 3A shows an upper mixer 28 accordant with the invention in more detail from the side and Figure 3B shows it from above. The upper mixer has at least six, preferably eight plate-like, rectangular vanes or blades 37, which are installed on the shaft 27. The blades of the upper mixer 28 are inclined from the horizontal at a degree of $\alpha$ 25° - 35°, preferably 30°, and the height of the mixer 38 itself is in the region of one sixth of the mixer diameter $D_1$ ($h_1/D_1=1/6$). The purpose of the mixer blades is to cause such a stable flow field near the slurry surface in the reactor that horizontal and vertical vortexes 34 and 35 are formed from the surface and the flow rising from the reactor edge zone, which suck gas into themselves. The mixer blades 37 mix the gas into the slurry and push them as a uniform flow 36 down from the centre of the reactor towards the lower mixer 29.

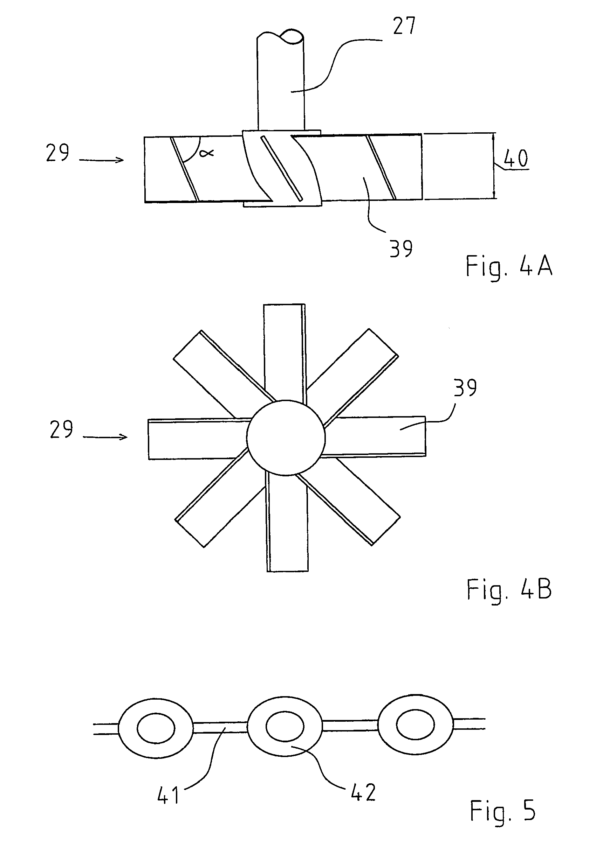

Figure 4A presents a lower mixer 29 accordant with the invention seen from the side and Figure 4B shows the mixer seen from above. The lower mixer 29 has at least six, preferably eight plate-like, rectangular mixer blades 39.

Each blade is at a certain angle $\alpha$ to the horizontal, which in the case of the lower mixer is between 50 - 70°, but preferably 62°. The blades are wider than normal so that seen from the side the height of the mixer 40 is a quarter of the mixer diameter $D_2$ ($h_2/D_2=1/4$).

The purpose of the lower mixer 29 is to receive the gas-slurry flow 36 pushed down by the upper mixer 28 from the centre of the reactor, to disperse the gas into even smaller bubbles and furthermore to push the suspension that is formed towards the cylindrical lower section of the vertical wall 31 of the reactor. Collision at the wall occurs near the bottom of the reactor, but nevertheless above it. At this stage the flow divides into two parts: the first sub-stream 32 carrying gas bubbles with it, turns gently downwards towards the centre of the reactor bottom and on from the centre up towards the middle of the lower mixer, into which flow the reaction gas is fed, and the second sub-stream 33 turns steeply upwards along the wall in a small radius, taking with it solids particles and gas bubbles thanks to its strength.

Both mixers 28 and 29 are larger in diameter than normal i.e. between over 0.4 times, but a maximum of 0.5 times the reactor diameter. Both mixers have their own important task, according to which the mixers are specified. The height 40 of the lower mixer is around 1.5 times the height 38 of the upper mixer.

Figure 5 presents a cross-section of one flow baffle 23 accordant with the invention, which is composed of heating/cooling tubes 42 attached to each other by means of fin-like projections 41.

The invention is described in more detail with the aid of the attached examples.

Example 1.

In a study a comparison was made of the effect of three mixers of normal construction with different diameters (D) on the vertical vortex generation mechanism. The mixers were thus ordinary four-blade "pitch-blade" type mixers, where the angle of inclination of the blades was 45° and the ratio of the height of the mixer h to the mixer diameter D was also that used in most conventional solutions i.e. h/D = 1/6. In all the tests the distance of the mixer from the slurry surface per mixer diameter was the same. In the measurements given in Table 1, the rotational speed $N_{crit}$ at which vertical vortexes started to form was determined. Using this measured rotational speed the dimensionless number $K_{cv}$ was determined and proved to be constant. Closer inspection of the constant shows it to be a valid function:

$$Fr_{cv} = K_{cv}*(D/T)^2$$

where

$Fr_{cv} =$ Froude number = $N^2 D/g$
$N =$ rotational speed of the mixer
$D =$ diameter of the mixer
$T =$ diameter of the reactor
$g =$ gravitational acceleration

This short test series showed that the behaviour of vertical vortexes is largely dependent on the Froude number and therefore in accordance with the theories presented in the literature.

Table 1.

Boundary rotational speed $N_{cv}$ for generation of vertical vortexes

| Test No. | D/T - | $N_{cri}$ rps | $W_{crit}$ m/s | $K_{cv}$ $N_{crit}^2 D^3/gT^2$ | $K_{cv}$ aver $N_{crit} D^3/gT^2$ |
|---|---|---|---|---|---|
| 1 | 0.381 | 4.00 | 4.79 | 0.690 | |
| 2 | 0.483 | 2.83 | 4.30 | 0.706 | |
| 3 | 0.525 | 2.42 | 3.96 | 0.657 | 0.684 |

Example 2.

At the same time the effect of the mixer on the horizontal vortex behaviour mechanism was studied by comparing the same three mixers with different diameters. The mixers were therefore again ordinary four-blade "pitch-blade" type mixers, as in the previous example. In all the tests the distance of the mixer from the surface of the slurry per mixer diameter was the same here too. In the measurements given in Table 2, the rotational speed $N_{crit}$ at which horizontal vortexes formed acceptably was determined. Using this measured rotational speed the dimensionless number $K_{cv}$ was determined, which proved to be constant. Closer inspection of the constant shows it to be a valid function:

$$Re_{cv} = K_{ch}$$

where

$Re_{cv} =$ Reynolds number = $ND^2/v$
$N =$ rotational speed of the mixer
$D =$ diameter of the mixer
$v =$ kinematic viscosity

This short test series in its part showed that the behaviour of horizontal vortexes is not dependent on the Froude number, but instead is "controlled" in fact by the Reynolds number. This in turn means that according to the rules of rheology the influential factor is in fact the right flow field, which is known to stay the same, as long as the turbulent zone is sufficient i.e. Re > 10 000.

Table 2.

Boundary rotational speed $N_{ch}$ for formation of horizontal vortexes

| Test No. | D/T - | $N_{crit}$ rps | $W_{crit}$ m/s | $K_{ch}$ $N_{crit} D^2/v$ | $K_{ch}$ aver $N_{crit} D^2/v$ |
|---|---|---|---|---|---|
| 1 | 0.381 | 6.00 | 7.19 | 872000 | |

(continued)

Boundary rotational speed $N_{ch}$ for formation of horizontal vortexes

| Test No. | D/T - | $N_{crit}$ rps | $W_{crit}$ m/s | $K_{ch}$ $N_{crit}D^2/v$ | $K_{ch}$ aver $N_{crit}D^2/v$ |
|---|---|---|---|---|---|
| 2 | 0.483 | 3.83 | 5.82 | 896000 | |
| 3 | 0.525 | 3.00 | 4.95 | 826000 | 865000 |

Example 3.

The effect was studied of the size of the upper mixer and lower mixer on the behaviour of both horizontal and vertical vortexes. It was found that with a small mixer / reactor diameter ratio D/T of below 0.4 one deep vortex was formed in the slurry surface at the base of the shaft, which deepened as the rotational speed increased as far down as the lower mixer. In conclusion one could say that if several constant and effective vortexes of the kind accordant with this invention are desired, the mixer diameter size D/T should be over 0.4.

Example 4

In the example the effect was studied of the size and number of baffles on the behaviour of the flow field in a cylindrical mixing reactor with a mixer member accordant with the invention. Eight baffles were used as baffles accordant with the invention with a width of 12.4% of the reactor diameter and an inner edge extending to a distance of 18.2 % of the reactor diameter. Standard baffles were used as reference baffles, of which there were four, with a width of 8.3 % and range of 10% of the reactor diameter. A very clear difference was found in the comparison in flow behaviour. When ordinary flow baffles were used, indeterminate fluctuations appeared in the slurry flow. However, when the baffles accordant with our invention were used, the indeterminate fluctuations in the slurry flow stabilised and were in accordance with the description of the method. In conclusion, it was found that the mixer member accordant with the invention is not sufficient alone to achieve the desired, stable flow field but that one characteristic part of the mixing apparatus accordant with the invention is the baffles described in the text, in relation both to their number and size.

Example 5

In this example, we studied the distribution of the slurry concentration in a cylindrical mixing reactor, which was a mixing apparatus accordant with the invention. The solids used were pyrite ore, which was ground to a fineness of 95% below 110 micrometres. The solids content was 500 g/l i.e. a slurry density of 1400 kg/m$^3$. Air was fed below the lower mixer at 2.4 m$^3$/h/m$^3$. The rotational speed of the mixers corresponded to a tip speed of 2.8 m/s. Solids samples were taken from three depths, whereby each represented one-third of the total slurry density. The following results were obtained:

Table 3

Slurry concentration in a reactor accordant with the invention

| | |
|---|---|
| Sample depth 1 i.e. upper section of reactor | 1360 kg/m$^3$ |
| Sample depth 2 i.e. middle section of reactor | 1330 kg/m$^3$ |
| Sample depth 3 i.e. lower section of reactor | 1360 kg/m$^3$ |

The results in the table show that mixing has been extremely well able to lift these fairly heavy solid particles (particle density 5000 kg/m$^3$) to the surface layer of the reactor and furthermore to distribute them very evenly throughout the entire reaction space (1350 kg/m$^3$ $\pm$1.3%).

**Claims**

1. A mixer apparatus for mixing gas into a slurry formed of a liquid and solids, where the apparatus consists of a closed cylindrical vertical reactor (20) provided with a bottom (21) and a cover (22), with an effective slurry height of around 1.5 - 2 times the diameter of the reactor, a mixer member located inside the reactor consisting of two mixers connected above each other on the same shaft (27), flow baffles (23), directed inwards with a range from the reactor wall (25) that is about 1/5 of the reactor diameter, and a gas feed pipe (30) located in the reactor, wherein the reactor is equipped with a mixer member (26), which consists of an upper mixer (28) and a lower mixer (29), whereby the straight-bladed upper mixer is equipped with at least six, preferably eight, blades (37), which are inclined from the horizontal at an angle of 25 - 35°, and the straight-bladed lower mixer is equipped with at least six, preferably eight, blades (39),
**characterized in that**

- the reactor is equipped with at least six, preferably eight flow baffles,
- the blades of the lower mixer are inclined from the horizontal at an angle of 60 - 70°,
- the gas feed pipe is located in the bottom of the reactor, below the lower mixer.

2. A mixer apparatus according to claim 1, **characterised in that** the power taken by the lower mixer (29) is at least three times, preferably at least five times that taken by the upper mixer (28).

3. A mixer apparatus according to claim 1, **characterised in that** the blades of the upper mixer (28) are inclined from the horizontal at an angle of 30°.

4. A mixer apparatus according to claim 1, **characterised in that** the blades of the lower mixer (29) are inclined from the horizontal at an angle of 62 °.

5. A mixer apparatus according to claim 1, **characterised in that** the height (40) of the lower mixer is in the region of ¼ of the mixer diameter.

6. A mixer apparatus according to claim 1, **characterised in that** the height (38) of the upper mixer is in the region of 1/6 of the mixer diameter.

7. A mixer apparatus according to claim 1, **characterised in that** the height (40) of the lower mixer is in the region of 1.5 times the height (38) of the upper mixer.

8. A mixer apparatus according to claim 1, **characterised in that** the diameter of the mixers (28,29) is over 0.4, but a maximum of 0.5 times the reactor (20) diameter.

9. A mixer apparatus according to claim 1, **characterised in that** the distance of the mixers from each other is in the region of 50 - 70% of the effective slurry height of the reactor.

10. A mixer apparatus according to claim 1, **characterised in that** the distance of the lower mixer (29) from the bottom (21) of the reactor is in the region of the diameter of the mixer.

11. A mixer apparatus according to claim 1, **characterised in that** the width of the baffles (23) is 12 - 15% of the diameter of the reactor.

12. A mixer apparatus according to claim 1, **characterised in that** the distance between the baffles and the reactor wall is in the region of 6 - 8% of the reactor diameter.

13. A mixer apparatus according to claim 1, **characterised in that** the baffle (23) forms a heat transfer member.

14. A mixer apparatus according to claim 13, **characterised in that** the baffle (23) consists of tubes (42) attached to each other by means of plate-like components (41).

15. A mixer apparatus according to claim 1, **characterised in that** the reactor bottom (21) is curved.

16. A method for dispersing gas fed into the bottom section of a closed reaction space into a slurry formed of a liquid and solids by means of flow baffles (23) and a mixer membe (26) located in the reaction space, whereby the effective slurry height of the reaction space is in the region of 1.5 - 2 times the diameter of the reaction space, wherein a mixer apparatus as claimed in one of the preceding claims is used, whereby the gas is fed below the lower mixer (29) into the slurry flow, which by means of said lower mixer (29) is directed to the lower part of the reaction space wall and is made to discharge there into two separate streams, one of which is made to turn via the wall towards the centre of the reaction space bottom in the form of a toroidal flow and the other to rise in the zone formed by the reaction space wall and the baffles (23) up towards the surface, where the flow is deflected by means of the upper mixer (28) towards the centre of the reaction space and is made to form at the same time horizontal and vertical vortexes carrying gas bubbles; the direction of the slurry flow in the centre of the reaction space is deflected by means of the upper mixer (28) to flow downwards as a uniform tubular flow towards the lower mixer (29).

17. A method according to claim 16, **characterised in that** the solids content of the slurry is in the region of 500 g/l.

18. A method according to claim 16, **characterised in that** the flow rate of the rising stream in the zone of the reaction space wall and baffles is 0.5 - 1.5 m/s, preferably 0.8 -1.2 m/s.

19. A method according to claim 16, **characterised in that** the cross-sectional area of the slurry flow directed downwards in the centre of the reaction space is in the region of 30 - 40% of the reactor cross-sectional area.

20. A method according to claim 16, **characterised in that** by choosing the right speed range the gas bubbles in the downward-directed slurry flow in the centre of the reaction space are put into oscillating motion.

21. A method according to claim 16, **characterised in that** the infeed of slurry into the reaction space and its removal from there occur as an overflow.


**Patentansprüche**

1. Mischer-Vorrichtung zum Mischen von Gas in eine aus einer Flüssigkeit und Feststoffen gebildeten Aufschlämmung, wobei die Vorrichtung aus einem geschlossenen, zylindrischen vertikalen Reaktor (20) besteht, der mit einem Boden (21) und einer Abdeckung (22) versehen ist, mit einer effektiven Aufschlämmungshöhe von dem 1,5 - 2-fachen des Reaktordurchmessers, einem Mischelement, dass innerhalb des Reaktors platziert ist und aus zwei Mischern besteht, die übereinander an derselben Welle (27) verbunden sind, Strömungsbleche (23), die in einem Bereich von der Reaktorwand (25) von ca. 1/5 des Reaktordurchmessers nach innen gerichtet sind, und einer Gaszufuhrleitung (30), die in dem Reaktor platziert ist, wobei der Reaktor mit einem Mischer-Element (26) ausgerüstet ist, das aus einem oberen Mischer (28) und einem untern Mischer (29) besteht, wobei der mit ebenen Schaufeln versehene obere Mischer mit zumindest sechs, vorzugsweise acht Schaufelblättern (37) ausgerüstet ist, die von der Horizontalen in einem Winkel von 25 - 35° geneigt sind, und der mit ebenen Schaufeln versehene untere Mischer mit zumindest sechs, vorzugsweise acht Schaufelblättern (39) ausgerüstet ist, **dadurch gekennzeichnet,**

    - **dass** der Reaktor mit mindestens sechs, vorzugsweise acht Strömungsblechen versehen ist,
    - die Schaufelblätter des unteren Mischers zur Horizontalen in einem Winkel von 60 - 70° geneigt sind,
    - die Gaszufuhrleitung in dem Boden des Reaktors unterhalb des unteren Mischers platziert ist.

2. Mischer-Vorrichtung nach Anspruch 1, **dadurch gekennzeichnet, dass** die vom unteren Mischer (29) aufgenommene Leistung zumindest der dreifachen, vorzugsweise mindestens fünffachen Leistung des oberen Mischers (28) entspricht.

3. Mischer-Vorrichtung nach Anspruch 1, **dadurch gekennzeichnet, dass** die Schaufelblätter des oberen Mischers (28) zur Horizontalen in einem Winkel von 30° geneigt sind.

4. Mischer-Vorrichtung nach Anspruch 1, **dadurch gekennzeichnet, dass** die Schaufelblätter des unteren Mischers (29) zur Horizontalen in einem Winkel von 62° geneigt sind.

5. Mischer-Vorrichtung nach Anspruch 1, **dadurch gekennzeichnet, dass** die Höhe (40) des unteren Mischers in dem Bereich von 1/4 des Mischerdurchmessers liegt.

6. Mischer-Vorrichtung nach Anspruch 1, **dadurch gekennzeichnet, dass** die Höhe (38) des oberen Mischers in dem Bereich von 1/6 des MischerDurchmessers liegt.

7. Mischer-Vorrichtung nach Anspruch 1, **dadurch gekennzeichnet, dass** die Höhe (40) des unteren Mischers in dem Bereich des 1,5-fachen der Höhe (38) des oberen Mischers liegt.

8. Mischer-Vorrichtung nach Anspruch 1, **dadurch gekennzeichnet, dass** der Durchmesser der Mischer (28, 29) mehr als das 0,4-fache jedoch maximal das 0,5-fache des Reaktor-(20)-Durchmessers ist.

9. Mischer-Vorrichtung nach Anspruch 1, **dadurch gekennzeichnet, dass** der Abstand der Mischer zueinander in dem Bereich von 50 - 70 % der effektiven Aufschlämmungshöhe des Reaktors liegt.

10. Mischer-Vorrichtung nach Anspruch 1, **dadurch gekennzeichnet, dass** der Abstand des unteren Mischers (29) von dem Boden (21) des Reaktors in dem Bereich des Durchmessers des Mischers liegt.

11. Mischer-Vorrichtung nach Anspruch 1, **dadurch gekennzeichnet, dass** die Breite der Bleche (23) 12 - 15 % des Durchmessers des Reaktors beträgt.

12. Mischer-Vorrichtung nach Anspruch 1, **dadurch gekennzeichnet, dass** der Abstand zwischen den Strömungsblechen und der Reaktorwand in dem Bereich von 6 - 8 % des Reaktordurchmessers liegt.

13. Mischer-Vorrichtung nach Anspruch 1, **dadurch gekennzeichnet, dass** das Strömungsblech (23) ein Wärmeübertragungselement bildet.

14. Mischer-Vorrichtung nach Anspruch 13, **dadurch gekennzeichnet, dass** das Strömungsblech (23) aus Rohren (42) besteht, die zueinander mittels plattenförmiger Bestandteile (41) befestigt sind.

15. Mischer-Vorrichtung nach Anspruch 1, **dadurch gekennzeichnet, dass** der Reaktorboden (21) gekrümmt ist.

16. Verfahren zum Dispergieren von Gas, das in dem Bodenbereich eines geschlossenen Reaktorraumes eingeführt wird in eine aus einer Flüssigkeit und Feststoffen gebildeten Aufschlämmung und zwar mit Hilfe von Strömungsblechen (23) und einem Mischer-Element (26), die in dem Reaktorraum platziert sind, wobei die effektive Aufschlämmungshöhe des Reaktorraumes in dem Bereich des 1,5 bis 2-fachen des Durchmessers des Reaktorraumes liegt, wobei eine Mischer-Vorrichtung nach einem der vorangehenden Ansprüche verwendet wird, wobei das Gas unterhalb des unteren Mischers (29) in dem Aufschlämmungsstrom eingeführt wird, wodurch dieser mit Hilfe des unteren Mischers (29) auf den unteren Teil der Reaktorraum-Wand gerichtet wird und hier in zwei separate Ströme geteilt wird, von denen der eine zur Drehung via der Wand in Richtung zum Zentrum des Reaktorraum-Bodens in der Form eines torroidalen Stromes gelenkt wird, und der andere in die Zone aufsteigt, die durch die Reaktorraum-Wand und die Strömungsbleche (23) gebildet ist, bis hinauf zur Oberfläche, wo der Strom mit Hilfe des oberen Mischers (28) in Richtung zum Zentrum des Reaktorraumes abgelenkt wird, und zur Bildung gleichzeitiger horizontaler und vertikaler Wirbel veranlasst wird, die Gasblasen tragen; wobei die Richtung des Aufschlämmungs-Stromes im Zentrum des Reaktorraumes mit Hilfe des oberen Mischers (28) abgelenkt wird, um nach unten als ein uniformer rohrförmiger Strom in Richtung zu dem unteren Mischer (29) zu strömen.

17. Verfahren nach Anspruch 16, **dadurch gekennzeichnet, dass** der Feststoffgehalt der Aufschlämmung in dem Bereich von 500g/l liegt.

18. Verfahren nach Anspruch 16, **dadurch gekennzeichnet, dass** die Strömungsrate des aufsteigenden Stroms in der Zone der Reaktorraum-Wand und der Strömungsbleche 0,5 - 1,5 m/s, vorzugsweise 0,8 - 1,2 m/s beträgt.

19. Verfahren nach Anspruch 16, **dadurch gekennzeichnet, dass** der Querschnittsbereich der nach unten in das Zentrum des Reaktorraumes ausgerichteten Aufschlämmungs-Stromes in dem Bereich von 30 - 40 % des Querschnittsbereiches des Reaktors liegt.

20. Verfahren nach Anspruch 16, **dadurch gekennzeichnet, dass** durch eine Auswahl des richtigen Geschwindigkeitsbereiches die Gasblasen in der abwärts gerichteten Aufschlämmungs-Strömung in dem Zentrum des Reaktionsraumes in eine oszillierende Bewegung versetzt werden.

21. Verfahren nach Anspruch 16, **dadurch gekennzeichnet, dass** das Einführen der Aufschlämmung in den Reaktionsraum und deren Entnahme von dort als ein Überlauf statt finden.

**Revendications**

1. Appareil de mélange destiné à mélanger du gaz dans une boue formée de un liquide et des solides, dans lequel l'appareil est constitué d'un réacteur vertical cylindrique fermé (20) pourvu d'un fond (21) et d'un couvercle (22), avec une hauteur de boue effective d'environ 1,5 à 2 fois le diamètre du réacteur, un élément de mixeur situé à l'intérieur du réacteur constitué de deux mixeurs reliés superposés sur le même arbre (27), des chicanes d'écoulement (23), dirigées vers l'intérieur avec un ordre de grandeur à partir de la paroi du réacteur (25) qui représente environ 1/5 du diamètre du réacteur, et un tuyau d'alimentation en gaz (30) situé dans le réacteur, dans lequel le réacteur est équipé d'un élément de mixeur (26), qui est constitué d'un mixeur supérieur (28) et d'un mixeur inférieur (29), le mixeur supérieur à lames droites étant équipé d'au moins six, préférentiellement huit, lames (37), qui sont inclinées par rapport à l'horizontale à un angle de 25 à 35°, et le mixeur inférieur à lames droites est équipé d'au moins six, préférentiellement huit, lames (39),
**caractérisé par le fait que**

- le réacteur est équipé d'au moins six, préférentiellement huit, chicanes d'écoulement,
- les lames du mixeur inférieur sont inclinées par rapport à l'horizontale à un angle de 60 à 70°,
- le tuyau d'alimentation en gaz est situé dans le fond du réacteur, sous le mixeur inférieur.

2.  Appareil de mélange selon la revendication 1, **caractérisé par le fait que** la puissance prise par le mixeur inférieur (29) est au moins trois fois, préférentiellement cinq fois, supérieure à celle qui est prise par le mixeur supérieur (28).

3.  Appareil de mélange selon la revendication 1, **caractérisé par le fait que** les lames du mixeur supérieur (28) sont inclinées par rapport à l'horizontale à un angle de 30°.

4.  Appareil de mélange selon la revendication 1, **caractérisé par le fait que** les lames du mixeur inférieur (29) sont inclinées par rapport à l'horizontale à un angle de 62°.

5.  Appareil de mélange selon la revendication 1, **caractérisé par le fait que** la hauteur (40) du mixeur inférieur représente environ 1/4 du diamètre du mixeur.

6.  Appareil de mélange selon la revendication 1, **caractérisé par le fait que** la hauteur (38) du mixeur supérieur représente environ 1/6 du diamètre du mixeur.

7.  Appareil de mélange selon la revendication 1, **caractérisé par le fait que** la hauteur (40) du mixeur inférieur représente environ 1,5 fois la hauteur (38) du mixeur supérieur.

8.  Appareil de mélange selon la revendication 1, **caractérisé par le fait que** le diamètre des mixeurs (28, 29) représente plus de 0,4 fois, mais au maximum 0,5 fois le diamètre du réacteur (20).

9.  Appareil de mélange selon la revendication 1, **caractérisé par le fait que** la distance des mixeurs entre eux représente environ 50 à 70 % de la hauteur de boue effective du réacteur.

10. Appareil de mélange selon la revendication 1, **caractérisé par le fait que** la distance du mixeur inférieur (29) par rapport au fond (21) du réacteur correspond environ au diamètre du mixeur.

11. Appareil de mélange selon la revendication 1, **caractérisé par le fait que** la largeur des chicanes (23) représente 12 à 15 % du diamètre du réacteur.

12. Appareil de mélange selon la revendication 1, **caractérisé par le fait que** la distance entre les chicanes et la paroi de réacteur représente environ 6 à 8 % du diamètre du réacteur.

13. Appareil de mélange selon la revendication 1, **caractérisé par le fait que** la chicane (23) forme un élément de transfert thermique.

14. Appareil de mélange selon la revendication 13, **caractérisé par le fait que** la chicane (23) est constituée de tubes (42) reliés entre eux au moyen de composants en forme de plaque (41).

15. Appareil de mélange selon la revendication 1, **caractérisé par le fait que** le fond du réacteur (21) est courbe.

16. Procédé de dispersion d'un gaz introduit dans la partie inférieure d'un espace de réaction fermé dans une boue constituée d'un liquide et de solides au moyen de chicanes d'écoulement (23) et d'un élément de mixeur (26) situé dans l'espace de réaction, la hauteur de boue effective de l'espace de réaction représentant environ 1,5 à 2 fois le diamètre de l'espace de réaction, dans lequel un appareil de mélange selon l'une des revendications précédentes est utilisé, le gaz étant introduit sous le mixeur inférieur (29) dans le flux de boue, qui, au moyen dudit mixeur inférieur (29), est dirigé vers la partie inférieure de la paroi de l'espace de réaction et est amené à s'y déverser en deux flux séparés, dont l'un est amené à se tourner par l'intermédiaire de la paroi vers le centre du fond de l'espace de réaction sous la forme d'un flux toroïdal et l'autre est amené à monter dans la zone formée par la paroi d'espace de réaction et les chicanes (23) vers la surface, où le flux est dévié au moyen du mixeur supérieur (28) vers le centre de l'espace de réaction et est amené à former simultanément des tourbillons horizontaux et verticaux entraînant des bulles de gaz ; la direction du flux de boue dans le centre de l'espace de réaction est déviée au moyen du mixeur supérieur (28) de manière à ce qu'il s'écoule vers le bas sous la forme d'un flux tubulaire uniforme vers le mixeur inférieur (29).

**17.** Procédé selon la revendication 16, **caractérisé par le fait que** la teneur en matières solides de la boue représente environ 500 g/l.

**18.** Procédé selon la revendication 16, **caractérisé par le fait que** le débit du flux croissant dans la zone de la paroi de l'espace de réaction et des chicanes est situé entre 0,5 et 1,5 m/s, préférentiellement entre 0,8 et 1,2 m/s.

**19.** Procédé selon la revendication 16, **caractérisé par le fait que** la zone transversale du flux de boue dirigé vers le bas dans le centre de l'espace de réaction représente environ 30 à 40 % de la zone transversale du réacteur.

**20.** Procédé selon la revendication 16, **caractérisé par le fait que**, en choisissant l'ordre de grandeur correct de vitesse, les bulles de gaz dans le flux dirigé vers le bas dans le centre de l'espace de réaction sont mises en mouvement d'oscillation.

**21.** Procédé selon la revendication 16, **caractérisé par le fait que** l'introduction de boue dans l'espace de réaction et son retrait hors dudit espace sont réalisés sous forme de trop-plein.

Fig. 1

Fig. 2

Fig. 3A

Fig. 3B

27

29 →

α

40

39

Fig. 4A

29 →

39

Fig. 4B

41

42

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4454077 A
- US 4328175 A
- US 5549854 A
- EP 1309394 A

**Non-patent literature cited in the description**

- **Hsu, Y-C. ; Peng, R.Y. ; Huang, C.-J.** Onset of gas induction, power consumption, gas holdup and mass transfer in a new gas-induced reactor. *Chem. Eng. Sci.,* 1997, vol. 52, 3883